# EUROPEAN PATENT SPECIFICATION

(11) **EP 1 882 611 B1**
(45) Date of publication and mention of the grant of the patent: **16.10.2013**
(21) Application number: 07014453.0
(22) Date of filing: 23.07.2007
(51) Int. Cl.: B60R 7/06, B60R 21/02

(54) **Compartment opening prevention mechanism**
Mechanismus zur Verhinderung der Öffnung eines Fachs
Mécanisme de prévention d'ouverture d'un compartiment

(30) Priority: 24.07.2006 JP 2006200447; 27.07.2006 JP 2006204095
(43) Date of publication of application: 30.01.2008
(73) Proprietor: Honda Motor Co., Ltd., Tokyo 107-8556 (JP)
(72) Inventor: Tani, Hisayoshi c/o Honda R&D Co., Ltd., Saitama 351-0193 (JP); Sakaguchi, Mitsuaki c/o Honda R&D Co., Ltd., Saitama 351-0193 (JP)
(74) Representative: Prechtel, Jörg

(56) References cited:
- JP-A- 57 140 248
- JP-A- 2001 098 817
- US-A- 4 743 060
- US-A- 5 476 283

## Description

### BACKGROUND OF THE INVENTION

### 1. FIELD OF THE INVENTION

The present invention relates to a tray-opening-prevention mechanism for preventing a lid of a tray placed on an instrument panel from being opened, taking into consideration a secondary collision between a passenger and a compartment structure caused by an impact of such a collision.

### 2. DESCRIPTION OF THE RELATED ART

Taking into consideration a secondary collision between a passenger and a compartment structure caused by an impact of such a collision, for example, the Federal motor vehicle safety standard FMVSS201 standardizes that "any of an instrument panel and a compartment inner door in a seatback is assumed to be closed when tested according to S5.1 (instrument panel impact) and S5.2 (seatback impact)" (excerpt).

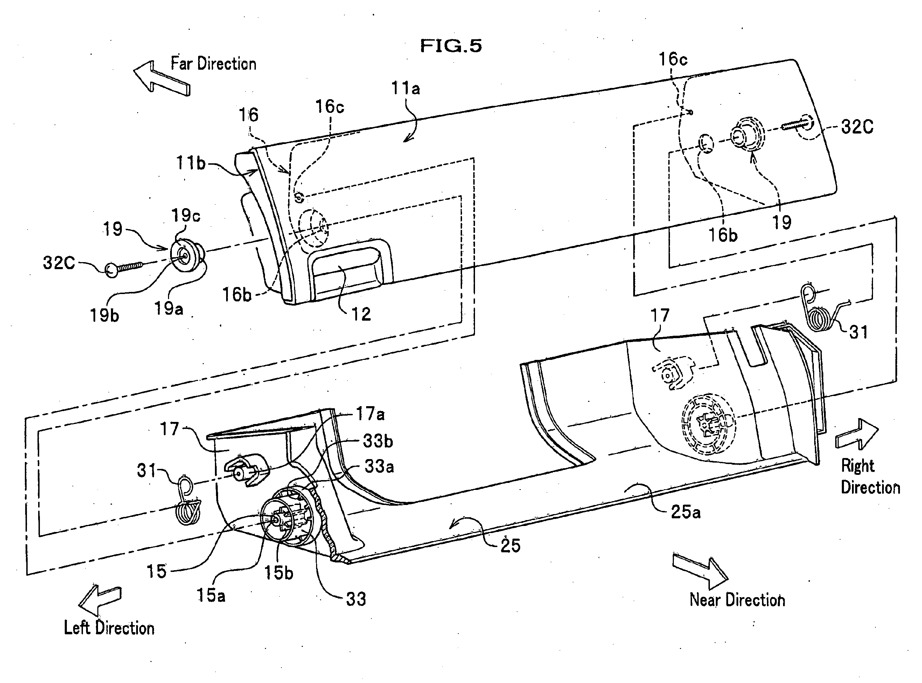

Conventionally, in order to meet such a standard, as recited in Japanese Patent Laid-Open Publication No. 2001-98817 (paragraphs 0042 to 0043 and FIG. 5), a lock mechanism is known that locks a lid of a glove box in a closed state when the lid receives an external force. In the lock mechanism a lock device is configured with a material of a high rigidity made of such as die-cast aluminum so that the lid is not deformed and does not fall in an opened state in receiving an external force.

However, in a case of using such a lock device disclosed in the JP 2001-98817, there is a problem that production cost becomes higher because the rigidity of the lock device is heightened by making it with die cast.

The Japanese patent laid-open application No. 57-140248 discloses a tray-opening-prevention mechanism according to the preamble of independent claim 1. This document intends to prevent the lid of a glove compartment from opening at time of a collision by the provision of a protrusion which collides with a striker part being a connecting part of a hook to hold the lid of the glove compartment closed, such that the protrusion collides with the striker part thus functioning as a stopper such that the hook is not moved to the front.

Accordingly, the connection between the hook and the striker part is not released and the lid of the glove compartment is not opened in case of an accident. In this case, the tray-opening-prevention mechanism is incorporated in the normal locking mechanism of the tray. In case the locking mechanism is damaged by an impact during a calculation, the tray-opening-prevention mechanism may also fail. As well, the collision of the protrusion with the striker part only occurs when the lid receives a downwardly acting force. In case of a force being directed inward, this collision does not necessarily occur, thus enabling a release of the hook in this case.

Accordingly, it is an object of the present invention to provide an alternative for a low-cost tray-opening-prevention mechanism for surely preventing a lid or tray for being undesirably opened when the lid receives an external force, especially an inwardly directed force.

### SUMMARY OF THE INVENTION

This object is achieved by a tray-opening-prevention mechanism for preventing a lid of a tray from being opened by an external force applied to the lid, the tray having a structure configured to open and close an opening of a tray body by rotating the lid upward and downward for the tray body, comprising a locking means provided on an opening end of the tray body and a back-face side of the lid which the locking means engages with each other and prevents the lid from being opened when the lid is deformed inward in a fully closed state of the lid, characterized in that the tray-opening-prevention mechanism further comprises a rotation shaft at a position separated from the lid, said rotation shaft acting as a swing center of the lid to swing the lid upward and downward to slidingly house the lid in a lid housing space above the tray to thereby open and close the opening, and that the locking means comprises a claw part on the opening end of the tray body, and a locking part on the back-face side of the lid and at a portion associated with the claw part in the fully closed state of the lid, wherein when an external force is applied to a front face of the lid in the fully closed state of the lid, such that the lid is deformed inward, the locking part engages with the claw part, and the locking means prevents the lid from being opened.

A further aspect of the present invention is the tray-opening-prevention mechanism, wherein the claw part is provided at least at one of an upper side and lower side of the opening end of the tray body, wherein the lid is a structure configured to join a lid front part and a lid back part, and wherein the lid back part comprises multistage ribs extending to the lid front part and, as the locking part, constitutes at least a rib at a portion associated with the claw part out of an upper side rib and lower side rib of the multistage ribs.

A further aspect of the present invention is the tray-opening-prevention mechanism, wherein the locking part comprises a slant face on a side approaching the claw part, and wherein when an external force is applied to the front face of the lid in the fully closed state of the lid, the claw part slides on the slant face and engages with the locking part.

A further aspect of the present invention is the tray-opening-prevention mechanism; wherein the claw part is provided on an upper side of an opening-end upper-side face of the tray body, an edge on a lower side of an opening-end lower-side face of the tray body is reinforced by providing a rib; wherein the lid is a structure configured to join a lid front part and a lid back part, wherein the lid back part comprises multistage ribs extending to the lid front part and, as the locking part, constitutes a portion of a rib out of an upper side rib of the multistage ribs which the portion corresponds to the claw part; wherein the locking part comprises a slant face on a side approaching the claw part; and wherein when an external force is applied to the lid front part in the fully closed state of the lid, the lid is deformed inward, a lid lower end slides on an upper side of the opening-end lower-side face, and the locking part engages with the claw part and prevents the lid from being opened.

A further aspect of the present invention is the tray-opening-prevention mechanism further comprising: an arm part configured to be provided at an interval on the back-face side of the lid, to be supported by the rotation shaft, and to rotate the lid; and a lock mechanism configured so that a latch claw of an operation knob provided at the lid engages with a latch support part provided on a side of the tray body and maintains the fully closed state of the lid, wherein at least one of the rotation shaft and the arm part has a fragile part, and an engagement part (opening-prevention rib) is provided on the back-face side of the lid adjacent to the lock mechanism, and wherein when an external force is applied to the front face of the lid in the fully closed state of the lid, the fragile part is broken, the engagement part engages with the lock mechanism and prevents the lid from being opened.

A further aspect of the present invention is the tray-opening-prevention mechanism, wherein furthermore the fragile part is provided at the rotation shaft provided on an outside of a sidewall of the tray body in a left-to-right direction.

In accordance with the invention, when an external force is applied to the front face of the lid in the fully closed state of the lid, it is deformed inward by the external force. The opening end of the tray body and the back-face side of the lid engage with each other by the locking means provided on the opening end and the back-face side, and thereby it becomes possible to prevent the lid from being opened undesirably. In a normal case of the lid being not deformed inward, the locking means is not engaged, and therefore, it is possible to rotate the lid upward and downward for the tray body and to open and close the opening of the tray body.

As a result thereof, it is possible to provide a tray-opening-prevention mechanism simpler in its structure, wider in selecting a use material, and cheaper in manufacturing cost than, for example, a tray-opening-prevention mechanism by such a method of making a lid lock device itself made of diecast aluminum as in a conventional technology.

Furthermore, in accordance with the invention, because the locking means is configured to comprise the claw part on the opening end of the tray body and the locking part at the portion of the back-face side of the lid which the portion corresponds to the claw part in the fully closed state of the lid, the lid is deformed inward, when an external force is applied to the front face of the lid in the fully closed state and the locking part of the lid engages with the claw part. Therefore, in the tray-opening-prevention mechanism it is possible for the locking means to prevent the lid from being opened.

Furthermore, in accordance with a further aspect of the invention, because the claw part is configured to be provided at least at one of the upper side and lower side of the opening end of the tray body, and because at least the rib at the portion associated with the claw part out of the upper side rib and lower side rib of the lid-back-part is configured as the locking part, the locking part has a sufficient strength, wherein the upper and lower side ribs extend to the lid-front-part. Accordingly, an external force is applied to the front face of the lid in the fully closed state of the lid, the lid is deformed inward by the external force, and the locking part of the lid engages with the claw part; therefore, in the tray-opening-prevention mechanism it is possible for the claw part to maintain a sufficient grip force between the claw part and the locking part and to prevent the lid from being undesirably opened.

Furthermore, in accordance with a further aspect of the invention, because the locking part comprises the slant face on the side approaching the claw part, when in the fully closed state of the lid an external force is applied to the front face of the lid and it is deformed inward, the claw part slides on the slant face and easily engages with the locking part; therefore, in the tray-opening-prevention mechanism it is possible for the locking part to prevent the lid from being undesirably opened.

Furthermore, in accordance with a further aspect of the invention, because the claw part is provided on the upper side of the opening-end upper-side face of the tray body and the edge on the lower side of the opening-end lower-side face of the tray body is reinforced by providing the rib, when an external force is applied to the lid front part in the fully closed state of the lid and the lid is deformed inward, the lid is strongly pushed between the lower side of the opening-end lower-side face and the claw part on the upper side of the opening-end upper-side face engaged at the locking part. Therefore, in the tray-opening-prevention mechanism it is possible for the claw part to maintain a sufficient grip force between the claw part and the locking part and to prevent the lid from being undesirably opened.

Furthermore, in accordance with a further aspect of the invention, when an external force is applied to the front face of the lid in the fully closed state of the lid, because the locking part provided on the back-face side of the lid adjacent to the lock mechanism engages with the lock mechanism, in the tray-opening-prevention mechanism it is possible for the locking part to prevent the lid from being undesirably opened.

### BRIEF DESCRIPTION OF THE DRAWINGS

FIG. 1 is a schematic drawing of an instrument panel at a front-passenger seat side of a vehicle where a tray-opening-prevention mechanism relating to an embodiment of the present invention is applied.
FIG. 2 is a front view of a tray where a front-part resin sheet of the instrument panel and a lid are removed.
FIG. 3 is a sectional arrow view along a line A-A in FIG. 2.
FIG. 4 is a perspective view showing a configuration of the lid.
FIG. 5 is a perspective view showing an assembly of the lid and a tray body lower portion from a near side.
FIG. 6 is a perspective view showing an assembly of the lid and the tray body lower portion from a far side:
FIG. 7 is a sectional arrow view along a line B-B in FIG. 2 where a left arm part is shown from left.
FIG. 8 is a sectional arrow view along a line C-C in FIG. 2 where a left sidewall of the tray body is shown from left.
FIG. 9 is a partial sectional arrow view along a line D-D in FIG. 8.
FIG. 10 is a partial sectional perspective view illustrating a lock mechanism.
FIGS. 11A and 11B are drawings illustrating a breakage of a fulcrum shaft.
FIG. 12 is a drawing illustrating the lid fitting in an opening.
FIGS. 13A and 13B are partial sectional views of the lock mechanism; FIG. 13A is a sectional arrow view along a line E-E in FIG. 2; and FIG. 13B is a drawing illustrating a behavior of the lock mechanism when the lid fits in the opening in FIG: 13A.

### BEST MODE FOR CARRYING OUT THE INVENTION

Here will be described an embodiment of the present invention, referring to drawings as needed.

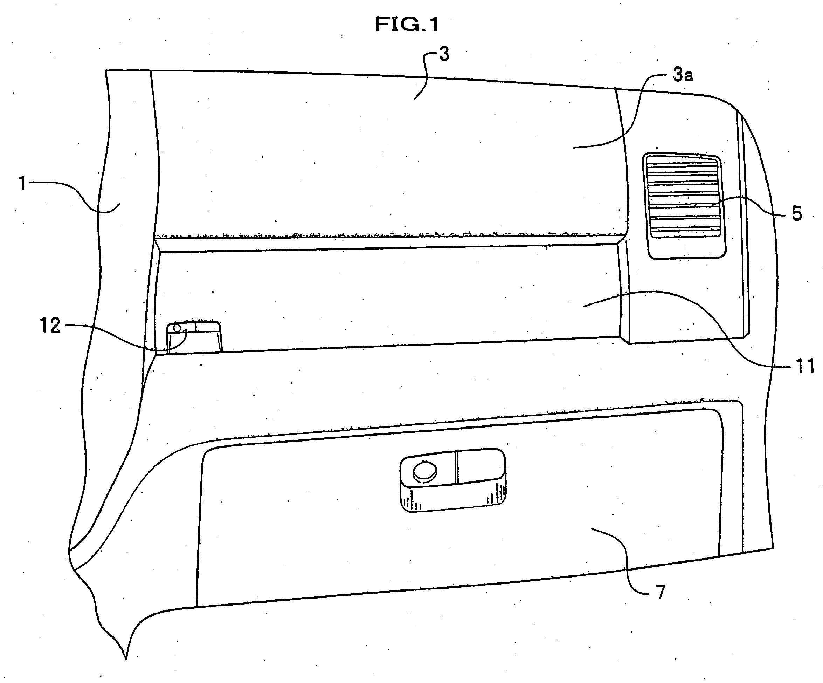

In addition, in the embodiment, although an example applied to a left-hand drive vehicle is shown as in FIG. 1, the embodiment is not limited thereto and is also applicable to a right-hand drive vehicle.

Furthermore, here a state of a tray 4 being attached to the vehicle is made a reference of "left and right" and "up and down." Then in describing a configuration of the tray 4, a front direction or front side of the vehicle is called "far direction" or "far side" of the tray 4; a rear direction or rear side of the vehicle is called "near direction" or "near side" thereof.

As shown in FIG. 1, an audio control panel 1 is disposed on a left side (near center in the left-to-right direction of a passenger compartment) of FIG. 1, an instrument panel 3 is disposed on a right side of the panel 1, and a blowoff outlet 5 of an air-conditioner is further disposed on a right side of the panel 3. Furthermore, below the instrument panel 3 and the air outlet 5 is disposed a glove box 7.

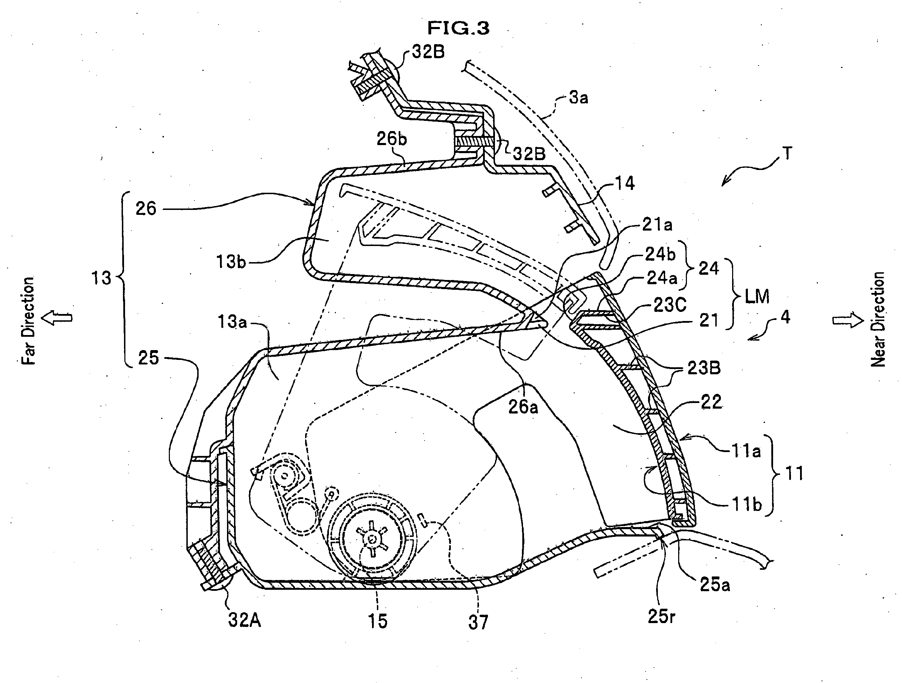

Approximately an upper half of the instrument panel 3 is covered with a front-part resin sheet 3a; approximately a lower half of a lower portion of the panel 3 is occupied by a lid 11 of a fully closed state. The instrument panel 3 has the tray 4 (see FIG. 3) in a portion covered with the lid 11, wherein an opening 22 can be opened and closed by the lid 11. The lid 11 has an operation knob 12 in a lower portion near a left end thereof and to unlock a lock mechanism (not shown in FIG. 3) for locking the lid 11 in the fully closed state.

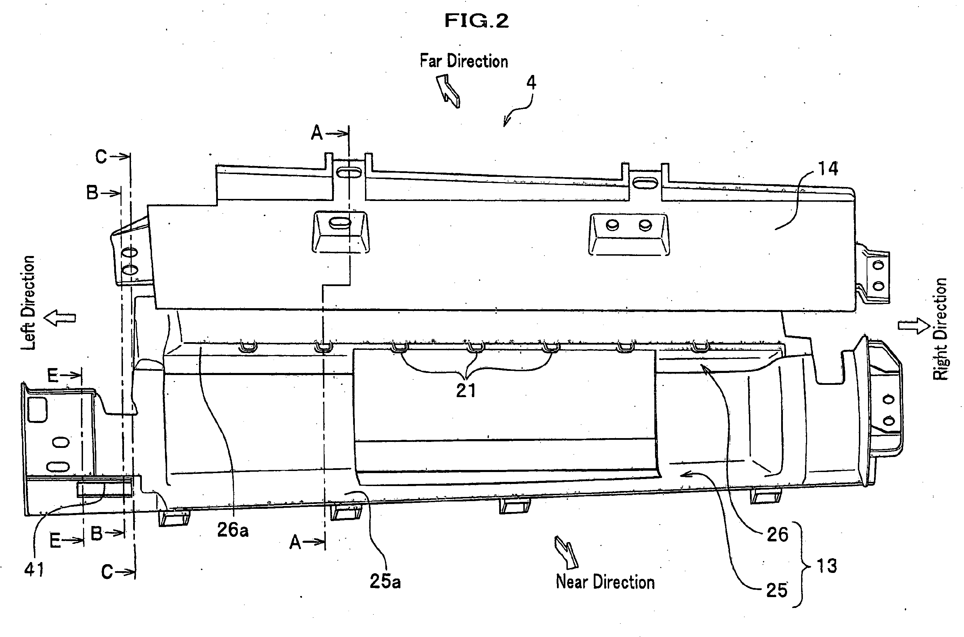

In addition, a latch support part 41 where the operation knob 12 of the lock mechanism T is latched is provided at a corresponding place near a left-end lower portion on a near side of a tray body 13, extending obliquely downward (see FIG. 2).

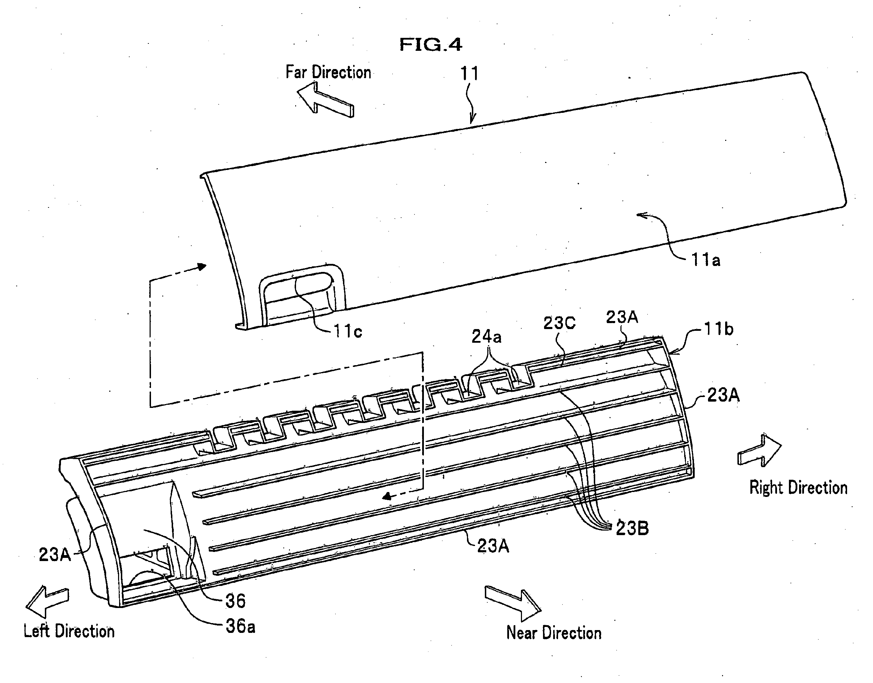

FIG. 2 shows a front view of the tray 4 from which the front-part resin sheet 3a of the instrument panel 3 and the lid 11 in FIG. 1 are removed. FIG. 3 is a sectional arrow view along the line A-A in FIG. 2. FIG. 4 is a perspective view showing a configuration of the lid 11.

As shown in FIGS. 2 and 3, the tray 4 is mainly configured with the lid 11 (see FIG. 1), the tray body 13 configured with a tray body lower portion 25 and a tray body upper portion 26, and a connection part 14 fixed on the tray body upper portion 26.

### <Configuration of Tray Body>

The tray body 13 is, as shown in FIG. 3, configured to be a two-stage structure having two spaces of a tray space 13a and a lid housing space 13b disposed above the space 13a, wherein the tray body lower portion 25 and the tray body upper portion 26 individually resin-molded are fixed by a tapping screw 32A. Making a fulcrum shaft (rotation shaft) 15 described later a rotation center, the lid 11 is rotatably provided; by being rotated upward, the lid 11 is housed in the lid housing space 13b and the opening 22 of the tray space 13a is opened.

On the near side of an upper face portion 26b constituting the lid housing space 13b of the tray body upper portion 26, the connection part 14 made of resin and constituting an eaves structure is configured to be fixed by a tapping screw 32B, while a gap is kept that can house the lid 11. Furthermore, thereon is attached the front-part resin sheet 3a of the instrument panel 3.

As shown in FIGS. 2 and 3, in the tray body upper portion 26 are protrudingly provided a plurality of claw parts 21 of a predetermined length at an interval in the left-to-right direction and on the near side of an opening-end upper side 26a facing the opening 22 of the tray space 13a. The claw parts 21 are provided by integral molding together with a reinforcement rib 21a (see FIG. 3) at the tray body upper portion 26 made of resin. Furthermore, as shown in FIG. 3, an opening-end lower side 25a facing the opening 22 of the tray space 13a is reinforced by a rib of which an edge is extended downward.

Furthermore, in the tray body lower portion 25 is protrudingly provided each fulcrum shaft (rotation shaft) 15 integrally formed with the portion 25 outside left and right sidewalls 17 in the left-to-right direction of (see FIG. 5).

In addition, in the embodiment, although in the tray body 13 the tray body lower portion 25 and the tray body upper portion 26 individually resin-molded are integrally configured by screw fixing, the embodiment is not limited thereto. The whole of the tray body 13 may be configured with a resin molded integral body.

### <Configuration of Lid>

The lid 11 is, as shown in FIGS. 3 and 4, a lid body of a dual structure composed of a lid front part 11a constituting a front-face side (near side) of the lid 11 and a lid back part 11b constituting a back-face side (far side) of the lid 11, and a strength of the lid 11 is heightened by adhering the part 11a to the part 11b.

Therefore, as shown in FIG. 4, on the near side of the lid back part 11b are provided frame ribs 23A surrounding four sides of the part 11b, and horizontal ribs 23B extending in the left-to-right direction and disposed like steps (multistages). The frame ribs 23A and the horizontal ribs 23B are melt-bonded to the lid front part 11a at portions where the ribs 23A and 23B contact a back face of the lid front part 11a.

The upper frame rib 23A and an upper-stage rib 23C are, as shown in FIG. 4, are depressed downward at portions associated with positions of the claw parts 21 in the fully closed state of the lid 11, make an integrated rib form, and constitute locking faces 24a where an upper face of the rib 23C thus depressed downward engages with the claw parts 21. As shown in FIG. 3, the downward depressed rib form of the upper-stage rib 23C has slant faces 24b slanting downward on the far side (side approaching to the claw parts 21) of the locking faces 24a. A locking part 24 is configured with the locking face 24a and the slant face 24b, and when the lid 11 moves to the far side (when deformed inward), receiving an external force, it is adapted for each claw part 21 to ride on the slant face 24b, to slide on it as far as the locking face 24a, and to engage with the locking part 24. The claw part 21 and the locking part 24 constitute a locking means LM.

In addition, an explanation of a detailed locking action among the claw part 21, the locking face 24a, and the slant face 24b will be described later.

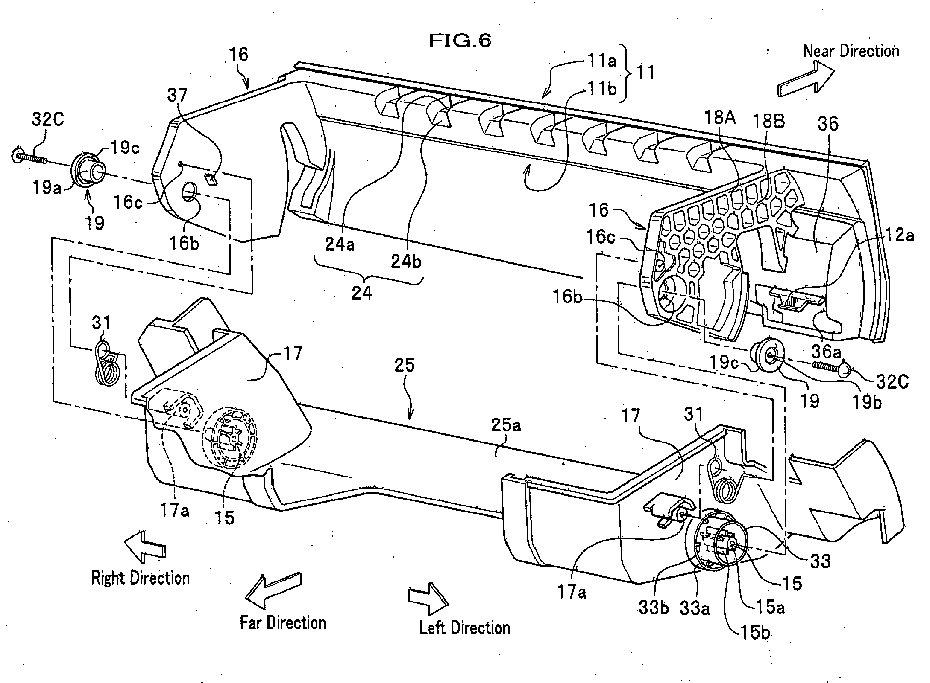

The lid back part 11b has, at a lower portion near a left end thereof, a lock mechanism housing part 36 (see FIG. 6) for housing a lock mechanism 44 described later that locks the lid 11 in the fully closed state. In the lid back part 11b is provided an operation knob hole 36a for the operation knob 12 configured to unlock a locked state of the lock mechanism 44. Furthermore, in the lid front part 11a, at a lower portion near a left end thereof is provided an operation knob hole 11c associated with the lock mechanism housing part 36.

The lid back part 11b is connected to arm parts 16 extending to the fulcrum shafts 15 near left and right ends of the part 11b. In other words, the arm parts 16 are provided at an interval on the back face of the lid 11. A detailed structure configured to support each arm part 16 with the fulcrum shaft 15 and that of the lock mechanism 44 will be described later.

### <Detailed Configuration of Fulcrum shaft and Arm Part>

Next will be described a detailed configuration of each fulcrum shaft 15, the arm part 16, and the like will be described, referring to FIGS. 5 to 9.

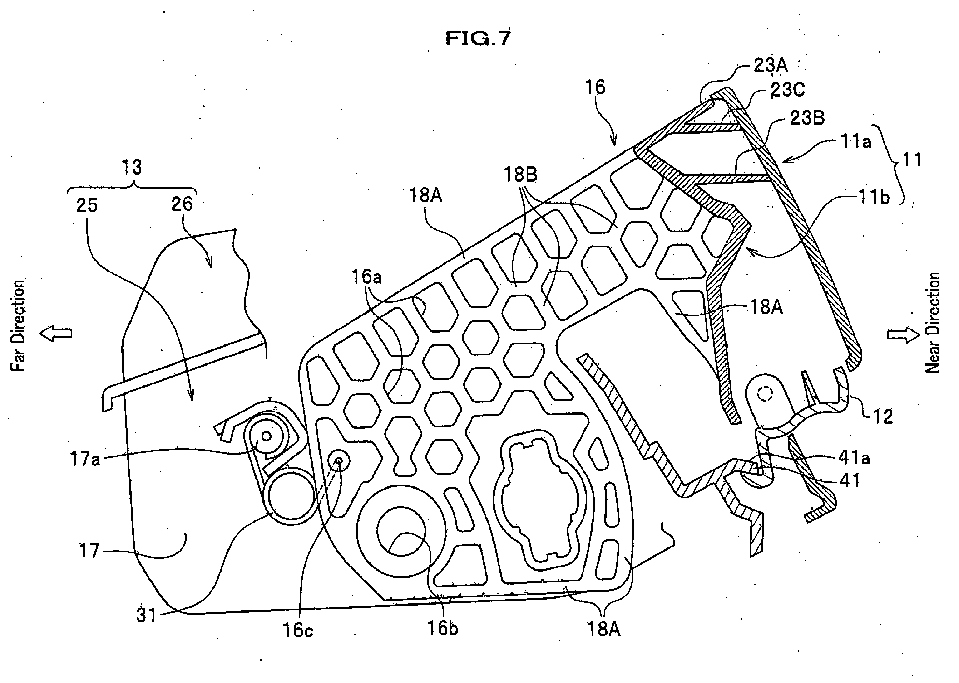

As shown in FIGS. 6 and 7, the arm part 16 is integrally molded with the lid back-part 11b, is made of resin, and has a honeycomb structure with a bottom in order to increase a rigidity and strength thereof. Sides (insides in the left-to-right direction of the tray space 13a) facing the sidewalls 17 of the tray body lower portion 25 have approximately a flat face; the other sides (outsides in the left-to-right direction of the tray space 13a) have the honeycomb structure. The arm part 16 has arm frame ribs 18A for surrounding approximately a periphery thereof, and arm cell ribs 18B for surrounding individual cells 16a of the honey comb structure. According to such a honeycomb structure, the arm part 16 is adapted to be a structure having a sufficient strength not only for an external force from the lid 11 but also for a bending stress.

As shown in FIGS. 6 and 7, fulcrum shaft holes 16b are respectively provided at positions associated with the fulcrum shafts 15 of the left and right arm parts 16 of the lid 11. Furthermore, each arm part 16 has a spring locking hole 16c as a spring seat for hooking one end of a torsion coil spring 31, in order to facilitate the lid 11 to rotate from an opened state to a fully closed state described later.

The other end of the torsion coil spring 31 is configured to be a loop form of approximately one round, is provided on an oblique upward far side of each fulcrum shaft 15 of the left and right sidewalls 17 in the tray body lower portion 25, and is fitted in an outer periphery of a columnar spring locking part 17a integrally formed with each of the sidewalls 17.

As shown in FIGS. 5 and 6, each of the fulcrum shafts 15 is a cylindrical shape having a tapping hole 15a, and is integrally formed with the sidewall 17.

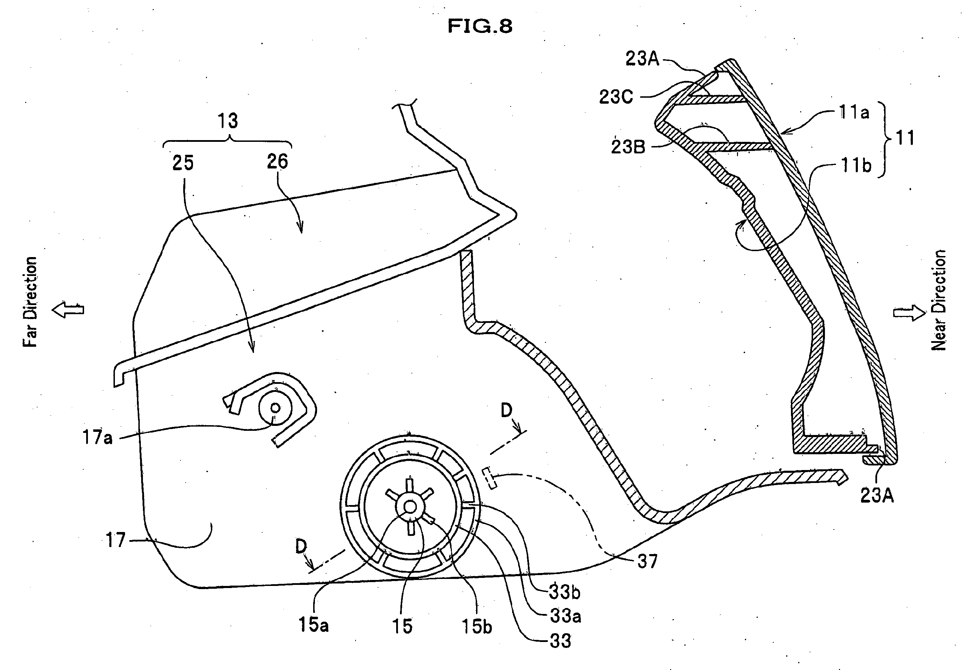

As shown in FIGS. 5 and 6, although the fulcrum shaft 15 has in approximately a radial direction fulcrum shaft ribs15b at a root portion for the sidewall 17 and reinforces a bending strength in a case of supporting the shaft 15 like a cantilever on a side of the sidewall 17, no support rib 15b is provided in the far direction (see FIG. 8). In accordance with such a configuration, the fulcrum shaft 15 is configured to be weak against an external force in the far direction, compared to those in other directions such as the near direction, the upward and downward directions, and the like, and the root portion on the far side is adapted to be a structure where the portion easily breaks off. An arrangement of the fulcrum shaft ribs 15b around the fulcrum shaft 15 constitutes a fragile part of the present invention.

As shown in FIGS. 5 and 6, around each fulcrum shaft 15, on the sidewall 17 is provided a concentric cylindrical guide boss 33 by integral molding.

Furthermore, a short-length reinforcement cylindrical part 33a is concentrically provided outside a root of the guide boss 33, is raised from the sidewall 17, and an outer periphery of the boss 33 and an inner periphery of the part 33a are joined by radial reinforcement ribs 33b. The guide boss 33, the reinforcement cylindrical part 33a, and the radial reinforcement ribs 33b are integrally molded with the sidewall 7.

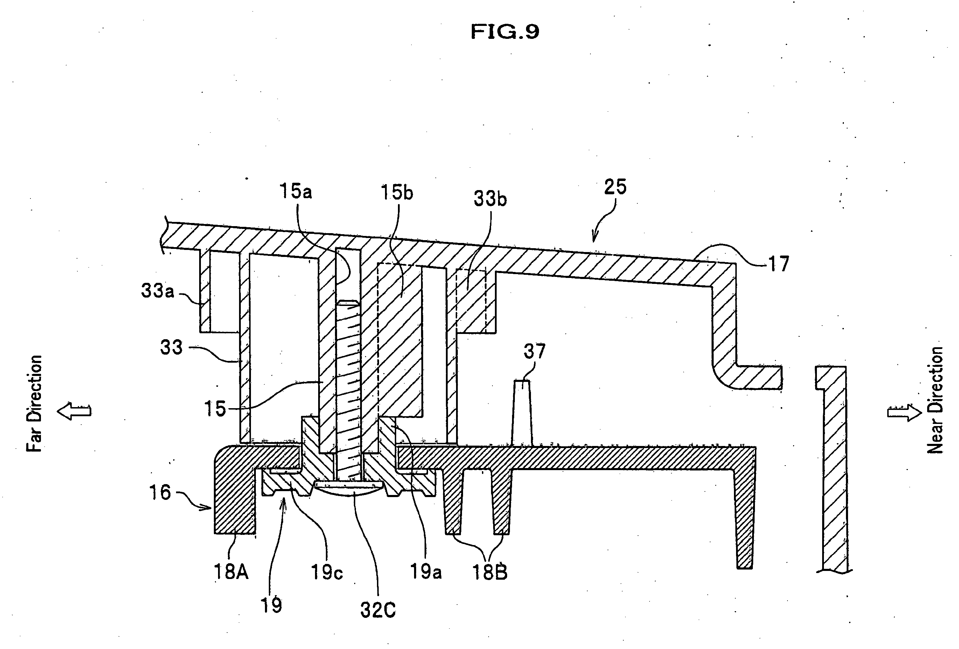

As shown in FIGS. 5 and 6, each of the arm parts 16 is attached to the fulcrum shaft 15 by fitting a hold-down member 19 in a fulcrum shaft hole 16b made of resin. The hold-down member 19 has a center hole 19b and a collar part 19c on an end face of a bottom side of a cylindrical part 19a having a bottom. Furthermore, an inner diameter of the cylindrical part 19a corresponds to an outer diameter of the fulcrum shaft 15. By fitting the cylindrical part 19a of the hold-down member 19 in the fulcrum shaft hole 16b, fitting the fulcrum shaft 15 inside the part 19a of a back-face side (inside in the left-to-right direction of the tray space 13a) of the member 19, and tightening the tapping screw 32C in the tapping hole 15a through the center hole 19b of the member 19, the collar part 19c of the member 19 holds down an edge of the hole 16b, an end face of the shaft 15 contacts a bottom face of the part 19a, and top ends of the fulcrum shaft ribs 15b contact the end face of the part 19a (see FIG. 9).

Each of the left and right arm parts 16 is adapted to be able to slide between an inner periphery of the fulcrum shaft hole 16b and an outer periphery of the cylindrical part 19a, and between an outer face of the part 16 and an inner face of the collar part 19c and between the outer face and an end face of the guide boss 33, and to rotate upward and downward.

On each inner face (face opposing the sidewall 17) of the left and right arm parts 16 is provided a tongue-like locking protrusion 37 raised from the inner face of the part 16 to an inside (each inside of the left-to-right direction of the tray space 13a) and integrally molded with the part 16 (see FIG. 9).

In addition, the reinforcement ribs 33b provided around the guide boss 33 are radially and densely disposed with respect to the side of the locking protrusion 37 (see FIG. 8), compared to other peripheral directions.

### <Detailed Description of Lock Mechanism>

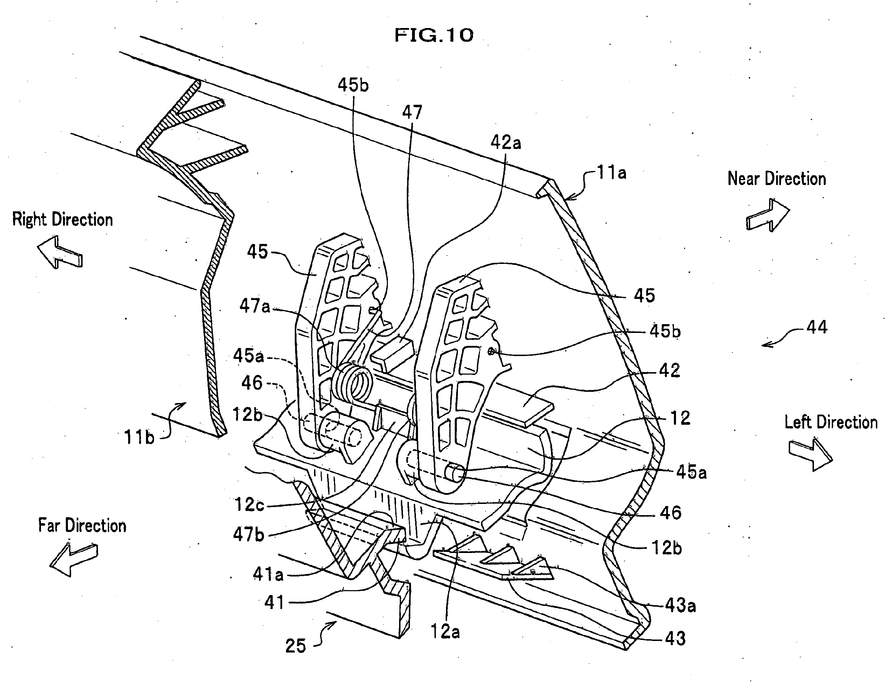

Next will be described the lock mechanism 44 for locking the lid 11 in the fully closed state, referring to FIG. 10 and appropriately FIGS. 3, 6 and 13A.

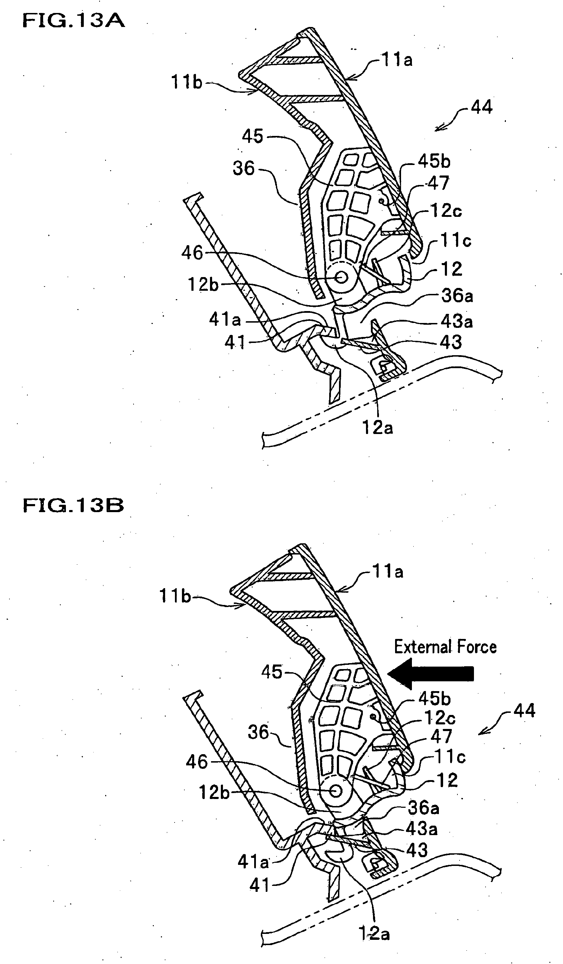

The lock mechanism 44 is provided on the back-face side (far side) of the lid front part 11a, the far side of the lock mechanism 44 is covered with the lock mechanism housing part 36 of the lid back part 11b; and a latch claw 12a extends below the operation knob 12 toward the far side from the operation knob hole 36a (see FIGS. 6 and 13A).

The lock mechanism 44 is mainly configured with the operation knob 12, knob fulcrum shaft arms 45, knob-fulcrum-shaft-arm-pins 46, a torsion coil spring 47, and the latch support part 41.

As shown in FIG. 10, the operation knob 12 is a member for releasing a locked state of the lock mechanism 44, a body of the knob 12 is a resin sheet of an approximately L-letter sectional form, and the knob 12, has the latch claw 12a on a far side end of the resin sheet, wherein the knob 12 extends approximately downward and a top end portion thereof is bent obliquely upward. Then in the operation knob 12 the latch claw 12a is latched under the latch support part 41, which extends in an oblique near direction associated with the lock mechanism 44 and is provided in an extension portion extended left from the left sidewall 17 of the tray body lower portion 25. An upper face of the latch support part 41 is configured to be a slant face 41a.

On an upper face of the operation knob 12 are provided two knob-fulcrum-shaft-arm-pin support seats 12b facing leftward and rightward on the knob 12, respectively, and the seats 12b are integrally molded with the knob 12. In the left knob-fulcrum-shaft-arm-pin support seat 12b, its hole for receiving the knob-fulcrum-shaft-arm-pin 46 described later is opened to left; in the right knob-fulcrum-shaft-arm-pin support seat 12b, its hole for receiving the knob-fulcrum-shaft-arm-pin 46 is opened to right.

From the back face (far-side face) of the lid front part 11a, downward toward the far side extend two knob fulcrum shaft arms 45 of a honeycomb structure with a bottom, which the arms 45 are integrally resin-molded with the lid front part 11a at an interval; and pin holes 45a are respectively drilled through in the left-to-right direction at top portions of the arms 45. By respectively inserting the knob-fulcrum-shaft-arm-pins 46 in the holes of the opposing knob support pin support seats 12 through the two left and right pin holes 45a, the operation knob 12 is configured to be rotatable in the upward and downward directions by making the pins 46 the rotation center.

Furthermore, each of the knob fulcrum shaft arms 45 has a spring locking hole 45b near a connection part with the lid front part 11a, and the operation knob 12 has a spring support seat 12c at a position in the near direction nearer than the knob-fulcrum-shaft-arm-pin support seats 12b and on the upper face of the knob 12. The torsion coil spring 47 comprises two torsion coil springs 47a and 47b of which ends are integrally joined into an end at a center of the spring 47; both ends except for the end at the center of the torsion coil spring 47 are hooked in respective spring locking holes 45b of the knob fulcrum shaft arms 45; the end at the center of the spring 47 where the springs 47a and 47b are joined is hooked on the spring support seat 12c; and thus the spring 47 is attached to the knob fulcrum shaft arms 45 and the seat 12c.

The spring support seat 12c of the operation knob 12 is pushed downward by a spring force of the torsion coil spring 47, and a lower face of the knob 12 contacts a lower side edge of the operation knob hole 11c and restricts the knob 12 not to rotate more downward. Then the latch claw 12a of the operation knob 12 is raised upward, the upper face of the claw 12a contacts the lower face of the latch support part 41, and the claw 12a makes the knob 12 to be in the locked state so that the lid 11 does not rotate upward and the opening 22 does not fall in the opened state.

When the lid 11 is made into the opened state, if the lower face of the operation knob 12 is pushed up by a finger, the knob 12 rotates upward with making the knob-fulcrum-shaft-arm-pins 46 as the rotation center. Then the latch claw 12a lowers down, a top end thereof becomes located on the near side nearer than the latch support part 41, the claw 12a is unlatched from the part 41, and the lid 11 rotates upward with keeping the claw 12a unlatched, making the fulcrum shaft 15 the rotation center, and is housed in the lid housing space 13b (see FIG. 3).

If the force by which the lid 11 is pushed up is removed, the lid 11 is pushed downward by a spring force of the torsion coil springs 31 (see FIG. 6) and rotates downward. At this time, if the lower face of the latch claw 12a strikes the latch support part 41, the claw 12a slides on the slant face 41a of an upper face of the part 41, and a top end of the claw 12a reaches as far as a lower side of the part 4. The lid 11 also rotates as far as a downmost position, and the opening 22 falls in the fully closed state. Thus the upper face of the latch claw 12a and the lower face of the latch support part 41 are engaged and fall in the locked state.

Slightly below the knob fulcrum shaft arms 45 of the lid back part 11b, a knob contact seat 42 integrally molded so as to extend in the far direction from the back face of the part 11b is provided by being reinforced by a reinforcement rib 42a, wherein when the operation knob 12 is pushed upward, the top end of the knob 12 bent into an L-letter form above the near side of the knob 12 contacts a lower face of the seat 42, and thus the seat 42 restricts the knob 12 not to be pushed up more upward.

Furthermore, at a portion associated with a back face side of the latch support part 41 slightly below the operation knob hole 11c of the lid back part 11b is provided an opening-prevention rib (engagement part) 43 integrally molded so as to extend in the far direction from the back face (far side) of the lid back part 11b and reinforced with a reinforcement rib 43a. The opening prevention rib 43 is configured to be at more left than the latch claw 12a and in parallel with the claw 12a so as not to intervene at a position in the left-to-right direction with the claw 12a-extended downward from the far side end of the operation knob 12 and so that a length to a top end of the rib 43 does not reach the latch support part 41 in normally opening and closing the lid 11.

### <Description of Action>

Next will be described a behavior of the fulcrum shaft 15, the lid 11, and the lock mechanism 44, when an impact in the far direction is applied to the front face of the lid 11.

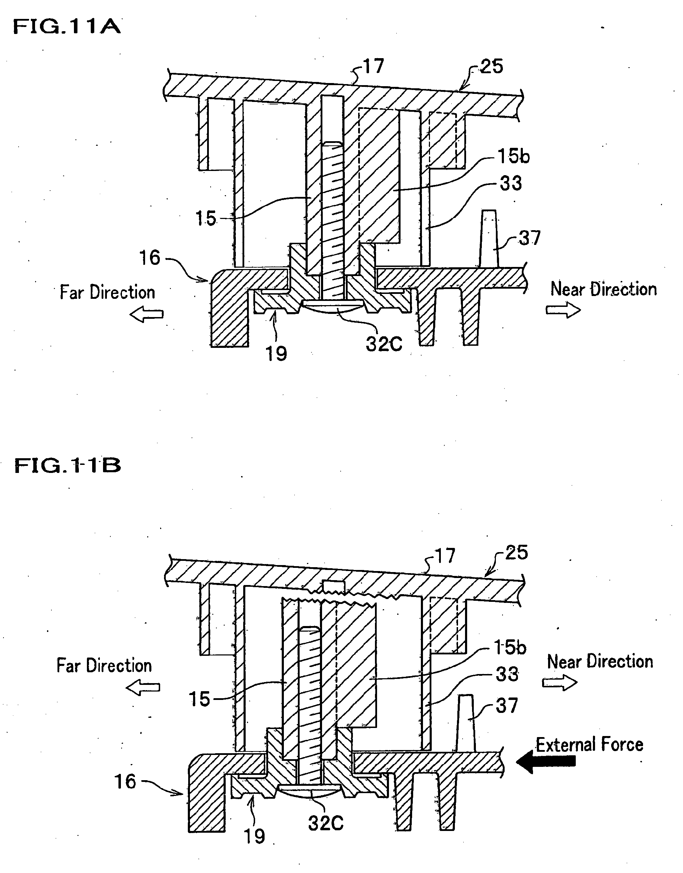

If a strong impact in the far direction is applied near the arm part 16 on the front face of the lid 11, the part 16 is pushed in the far direction as shown in FIG. 11B, the fulcrum shaft 15 is broken and separated from the sidewall 17 together with the fulcrum shaft rib15b and is displaced in the far direction (inward) because the rib 15b is not disposed around the fulcrum shaft 15 in the far direction and the lid 11 is configured to be comparatively fragile (see FIG. 8).

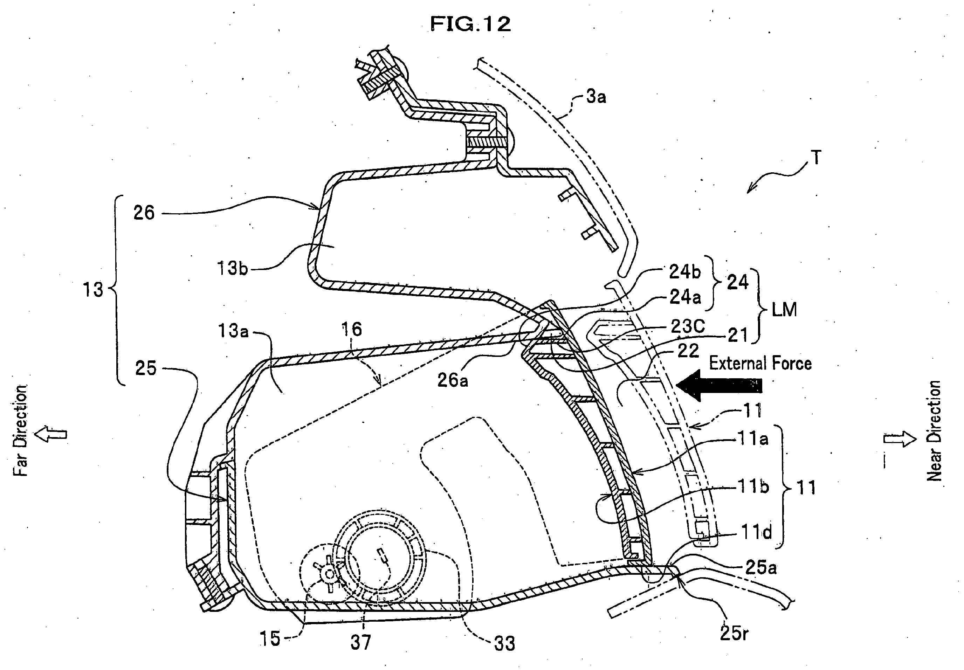

As a result thereof, as shown in FIG. 12, the lid 11 is pushed to the far direction; and in a lid lower end 11d its edge is guided by the opening-end lower-side face 25a reinforced by the rib 25r extended to the lower side, the end 11d slides on the upper face of the face 25a, and fits in the opening 22. Furthermore, because the locking part 24 associated with the claw part 21 of the upper-stage rib 23C of the lid back part 11b is depressed downward and has the slant face 24b slanting downward on the back-face side (far side), the claw part 21 contacts the face 24b, slides on the face 24b, and gets on the locking face 24a; thus the lower face of the claw part 21 and the face 24a of the locking part 24 are easily engaged.

Furthermore, when an impact in the far direction is applied to a center portion of the front face of the lid front part 11a, the lid 11 is deformed and bent in the far direction (deformed inward) although each of the fulcrum shafts 15 is not broken; and similarly, the lower face of the claw part 21 and the face 24a of the locking part 24 are easily engaged.

Because the lid 11 is strongly pinched between the opening-end lower-side face 25a and each of the claw parts 21 on the opening-end upper-side face 26a through the lid lower end 11d and the locking face 24a that is an upper face of the upper-stage rib 23C near an upper end of the lid 11, by the friction force the lid 11 fits in the opening 22; thereafter, the lid 11 does not again spring back in the near direction, and therefore, the opening 22 is not opened.

Moreover, if a strong impact in the far direction is applied near the right arm part 16 on the front face of the lid 11, the lid 11 approaches the far side, that is, the side of the tray body 13; therefore, in the lock mechanism 44, as shown in FIG. 13B, the operation knob 12b strikes the latch support part 41 and rotates upward, making the knob-fulcrum-shaft-arm-pins 46 the rotation center. However, because the opening-prevention rib 43 integrally molded on the back face (far side) of the lid back part 11b is provided in parallel with and on a left side of the latch claw 12a, that is, the rib 43 is provided adjacent to the lock mechanism 44, the rib 43 comes under and stops on the lower face of the latch support part 41 and engages with the part 41, independently of a state of the claw 12a. As a result thereof, the opening-prevention rib 43 is locked independently of the latch claw 12a so that the lid 11 does not fall in the opened state.

In accordance with the embodiment thus described, as the tray 4 for the instrument panel 3, for example, if a lock mechanism of a higher rigidity made of die-cast aluminum is not provided as conventionally, when an impact in the far direction due to such a collision is applied to the front face of the lid 11 as an external force, even the lock mechanism 44 made of resin fits in the opening 22 and thereafter is not opened. Furthermore, at the same time the latch support part 41 and opening-prevention rib 43 of the lock mechanism 44 are also strongly engaged, and thereby it is also possible to surely prevent the lid 11 from being undesirably opened.

As a result thereof, in accordance with even the light-weight and cheap lock mechanism 44, for example, by the claw parts 21, the locking parts 24, the opening-prevention rib 43, and the latch support part 41, it is possible to provide the opening-prevention mechanism of the tray 4 by which the lid 11 does not undesirably fall in the opened state even when the front face of the lid 11 receives an impact.

Particularly because each of the claw parts 21 is reinforced with the reinforcement rib 21a (see FIG. 3), it has a sufficient strength without being broken even when it is engaged with the locking part 24. Furthermore, because the claw parts 21 and the locking parts 24 are respectively engaged in a plurality of places in the left-to-right direction, a sufficient holding force can be obtained. Furthermore, because the claw parts 21 and the locking parts 24 are provided in the plurality of the places in the left-to-right direction, none of the fulcrum shafts 15 is broken even when an impact is applied to the front face of the lid 11; even when the lid 11 is deformed and bent in the far direction (deformed inward) and deformed in the far direction at any portion of the front face of the lid 11 in the left-to-right direction, the claw parts 21 and the locking parts 24 are easily engaged. Furthermore, because each of the locking parts 24 is configured with the locking face 24a, that is, the upper face of the upper-stage rib 23C, and the slant face 24b, the part 24 has a sufficient strength. Moreover, because the edge of the opening-end lower-side face 25a is reinforced by a rib 25r extended downward, it is possible to generate a sufficient reaction force upward, to keep a sufficient grip force between the claw parts 21 and the locking parts 24, and to hold the lid 11 between the face 25a and the opening-end upper-side face 26a even when the lid lower end 11d fits on the face 25a.

Although in the embodiment the claw parts 21 are configured to be provided on the upper side of the opening 22, the embodiment is not limited thereto. On the contrary, the claw parts 21 may be provided on the lower side of the opening 22, and the locking parts 24 may be provided at the lower portion of the lid back part 11b to be associated with the claw parts 21. Furthermore, the claw parts 21 may be provided at both of the upper and lower sides of the opening 22, and the locking parts 24 may be provided at both of the upper and lower portions of the lid back part 11b to be associated with the claw parts 21.

Furthermore, although the latch support part 41 and the opening-prevention rib 43 are configured to be disposed only on the side where the operation knob 12 is provided, the embodiment is not limited thereto. It is also available to provide the latch support part 41 also at an extension portion right from the right arm part 16 of the tray body lower portion 25 where the operation knob 12 is not provided and to provide the opening-prevention rib 43 at a portion of the lid back part 11b associated with the part 41.

Although in the embodiment the fulcrum shaft ribs 15b provided around each of the fulcrum shafts 15 is configured to be a fragile part, the embodiment is not limited thereto. By providing a fragile portion at the arm frame ribs 18A and arm cell ribs 18B of each of the arm parts 16, the part 16 is configured to be broken when an external force in the far direction is applied to the front face of the lid 11.

Thus although the embodiments of the present invention are described, the invention is not limited thereto, it goes without saying that the invention can be modified and changed within the spirit and scope thereof. For example, in the embodiments the opening 22 is configured to be opened by the lid 11 rotating upward from the fully closed state, the embodiments are not limited thereto; the opening 22 may also be configured to be opened by the lid 11 rotating downward from the fully closed state.

A tray-opening-prevention mechanism (T) for preventing a lid (11) of a tray (4) from being opened by an external force applied to the lid, which the tray has a structure configured to open and close an opening (22) of a tray body (13) by rotating the lid upward and downward for the tray body, includes locking means (LM) for engaging with each of an opening end of the tray body and a back-face side of the lid and for preventing the lid from being opened when the lid is deformed inward in a fully closed state of the lid.

## Claims

1. A tray-opening-prevention mechanism (T) for preventing a lid (11) of a tray (4) from being opened by an external force applied to the lid (11), the tray (4) having a structure configured to open and close an opening (22) of a tray body (13) by rotating the lid (11) upward and downward for the tray body (13),
comprising a locking means (LM) provided on an opening end of the tray body (13) and a back-face side (11b) of the lid (11) which the locking means (LM) engages with each other and prevents the lid (11) from being opened when the lid (11) is deformed inward in a fully close state of the lid (11),
**characterized in that**
the tray-opening-prevention mechanism (T) further comprises a rotation shaft (15) at a position separated from the lid (11), said rotation shaft (15) acting as a swing center of the lid (11) to swing the lid (11) upward and downward to slidingly house the lid (11) in a lid housing space (13b) above the tray to thereby open and close the opening (22), and that
the locking means (LM) comprises a claw part (21) on the opening end of the tray body (13), and a locking part (24) on the back-face side (11b) of the lid (11) and at a portion associated with the claw part (21) in the fully closed state of the lid (11),
wherein when an external force is applied to a front face of the lid (11) in the fully closed state of the lid (11), such that the lid (11) is deformed inward, the locking part (24) engages with the claw part (21), and the locking means (LM) prevents the lid (11) from being opened.

2. The tray-opening-prevention mechanism according to claim 1,
wherein the claw part (21) is provided on at least one of an opening-end upper-side face (26a) and opening-end lower-side face (25a) of the tray body (13), wherein the lid (11) is a structure configured to join a lid front part (11a) and a lid back part (11b), and
wherein the lid back part (11b) comprises multistage ribs (23A, 23B, 23C) extending to the lid front part (11a) and, as the locking part (24), has at least a rib at a portion associated with the claw part (21) out of an upper-side rib (23C) and lower-side rib (23B) of the multistage ribs.

3. The tray-opening-prevention mechanism according to claim 1 or 2,
wherein the locking part (24) comprises a slant face (24b) on a side approaching the claw part (21), and wherein when an external force is applied to the front face (11 a) of the lid (11) in the fully closed state, the claw part (21) slides on the slant face (24b) and engages with the locking part (24).

4. The tray-opening-prevention mechanism according to claim 1,
wherein the claw part (21) is provided on an opening-end upper-face (26a) of the tray body (13), and an edge on an opening-end lower-face side (25a) of the tray body (13) is reinforced by providing a rib (25r),
wherein the lid (11) is a structure configured to join a lid front part (11a) and a lid back part (11b),
wherein the lid back part (11b) comprises multistage ribs (23A, 23B, 23C) extending to the lid front part (11a) and, as the locking part (24), constitutes a portion of an upper side rib (23C) out of the multistage ribs which the portion is associated with the claw part (21), wherein the locking part (24) comprises a slant face (24b) on a side approaching the claw part (21), and
wherein when an external force is applied to the lid front part (11a) in the fully closed state of the lid, the lid (11) is deformed inward, a lid lower end (11d) slides on an upper side of the opening-end lower-side face, and the locking part (24) engages with the claw part (21) and prevents the lid (11) from being opened.

5. The tray-opening-prevention mechanism according to claim 1 further comprising:
an arm part (16) configured to be provided at an interval on a back face (11b) of the lid, to be supported by the rotation shaft (15), and to rotate the lid (11); and
a lock mechanism (44) configured so that a latch claw (12a) of an operation knob (12) provided at the lid (11) engages with a latch support part (41) provided on a side of the tray body (13) and
maintains the fully closed state of the lid (11), wherein at least one of the rotation shaft and the arm part has a fragile part (15b) and an engagement part (43) is provided on the back-face of the lid (11) adjacent to the lock mechanism (44), and
wherein when an external force is applied to the front face (11a) of the lid (11) in the fully closed state of the lid, the fragile part (15b) is broken and the engagement part (48) engages with the.lock mechanism (44) and prevents the lid (11) from being opened.

6. The tray-opening-prevention mechanism according to claim 5,
wherein the fragile part is provided at the rotation shaft provided on an outside of a sidewall (17) of the tray body (13) in a left-to-right direction.

## Patentansprüche

1. Fachöffnungsverhinderungsmechanismus (T) zum Verhindern, dass ein Deckel (11) eines Fachs (4) durch eine auf den Deckel (11) ausgeübte externe Kraft geöffnet wird, wobei das Fach (4) eine Struktur hat, die konfiguriert ist, um eine Öffnung (22) eines Fachkörpers (13) durch Aufwärts- oder Abwärtsdrehen des Deckels (11) für den Fachkörper (13) zu Öffnen und zu Schließen,
umfassend ein Sperrmittel (LM), das an einem Öffnungsende des Fachkörpers (13) und einer Rückseite (11 b) des Deckels (11) vorgesehen ist, wobei das Sperrmittel (LM) miteinander in Eingriff tritt und verhindert, dass der Deckel (11) geöffnet wird, wenn der Deckel (11) im vollständig geschlossenen Zustand des Deckels (11) einwärts verformt wird,
**dadurch gekennzeichnet, dass** der Fachöffnungsverhinderungsmechanismus (T) ferner an einer vom Deckel (11) getrennten Position eine Drehwelle (15) aufweist, wobei die Drehwelle (15) als Schwenkmitte des Deckels (11) zum Aufwärts- und Abwärtsschwenken des Deckels (11) wirkt, um den Deckel (11) in einem Deckelaufnahmeraum (13b) oberhalb des Fachs verschiebbar aufzunehmen, um hierdurch die Öffnung (22) zu öffnen und zu schließen, und dass
das Sperrmittel (LM) ein Klauenteil (21) an dem Öffnungsende des Fachkörpers (13) sowie ein Sperrteil (24) an der Rückseite (11 b) des Deckels (11) und an einem Abschnitt, der im vollständig geschlossenen Zustands des Deckels (11) dem Klauenteil (11) zugeordnet ist, aufweist,
worin, wenn im vollständig geschlossenen Zustand des Deckels (11) eine externe Kraft auf eine Vorderseite des Deckels (11) einwirkt, so dass der Deckel (11) einwärts verformt wird, das Sperrteil (24) mit dem Klauenteil (21) in Eingriff tritt, und das Sperrmittel (LM) verhindert, dass der Deckel (11) geöffnet wird.

2. Der Fachöffnungsverhinderungsmechanismus nach Anspruch 1, worin das Klauenteil (21) an einer Öffnungsendoberseite (26a) und/oder einer Öffnungsendunterseite (25a) des Fachkörpers (13) vorgesehen ist, worin der Deckel (11) eine Struktur ist, die konfiguriert ist, um ein Deckelvorderteil (11a) und ein Deckelrückteil (11 b) zu verbinden, und worin das Deckelrückteil (11b) mehrstufige Rippen (23A, 23B, 23C) aufweist, die sich zu dem Deckelvorderteil (11a) erstrecken, und, als das Sperrteil (24), von einer oberseitigen Rippe (23C) und einer unterseitigen Rippe (23B) der mehrstufigen Rippen, zumindest eine Rippe an einem Abschnitt aufweist, der dem Klauenteil (21) zugeordnet ist.

3. Der Fachöffnungsverhinderungsmechanismus nach Anspruch 1 oder 2, worin das Sperrteil (24) an einer sich dem Klauenteil (21) annähernden Seite eine Schrägfläche (24b) aufweist, und worin, wenn im vollständig geschlossenen Zustand eine externe Kraft auf die Vorderseite (11a) des Deckels (11) einwirkt, das Klauenteil (21) auf der Schrägfläche (24b) gleitet und mit dem Sperrteil (24) in Eingriff tritt.

4. Der Fachöffnungsverhinderungsmechanismus nach Anspruch 1, worin das Klauenteil (21) an einer Öffnungsendoberseite (26a) des Fachkörpers (13) vorgesehen ist, und ein Rand einer Öffnungsendunterseite (25a) des Fachkörpers (13) durch das Vorsehen einer Rippe (25r) verstärkt ist,
worin der Deckel (11) eine Struktur ist, die konfiguriert ist, um ein Deckelvorderteil (11a) und ein Deckelrückteil (11 b) zu verbinden,
worin das Deckelrückteil (11 b) mehrstufige Rippen (23A, 23B, 23C) aufweist, die sich zu dem Deckelvorderteil (11a) erstrecken, und, als das Sperrteil (24), einen Abschnitt einer oberseitigen Rippe (23C) von den mehrstufigen Rippen darstellt, welcher Abschnitt dem Klauenteil (21) zugeordnet ist,
worin das Sperrteil (24) an einer sich dem Klauenteil (21) annähernden Seite eine Schrägfläche (24b) aufweist, und
worin, wenn im vollständig geschlossenen Zustand des Deckels eine externe Kraft auf das Deckelvorderteil (11a) einwirkt, der Deckel (11) einwärts verformt wird, ein Deckelunterende (11d) auf einer Oberseite der Öffnungsendunterseite gleitet, und das Sperrteil (24) mit dem Klauenteil (21) in Eingriff tritt und verhindert, dass der Deckel (11) geöffnet wird.

5. Der Fachöffnungsverhinderungsmechanismus nach Anspruch 1, der ferner umfasst:
ein Hebelteil (16), das konfiguriert ist, um mit einem Intervall an einer Rückseite (11 b) des Deckels vorgesehen zu sein, zur Lagerung durch die Drehwelle (15) und zum Drehen des Deckels (11); und
einen Sperrmechanismus (44), der so konfiguriert ist, dass eine Sperrklaue (12a) eines am Deckel (11) vorgesehenen Betätigungsknopfs (12) mit einem Sperrträgerteil (41) in Eingriff tritt, das an einer Seite des Fachkörpers (13) vorgesehen ist, und den vollständig geschlossenen Zustand des Deckels (11) beibehält, worin die Drehwelle und/oder das Hebelteil ein brüchiges Teil (15b) aufweist und ein Eingriffsteil (43) an der Rückseite des Deckels (11) benachbart dem Sperrmechanismus (44) vorgesehen ist, und
worin, wenn im vollständig geschlossenen Zustand des Deckels eine externe Kraft auf die Vorderseite (11a) des Deckels (11) einwirkt, das brüchige Teil (15b) bricht und das Eingriffsteil (48) mit dem Sperrmechanismus (44) in Eingriff tritt und verhindert, dass der Deckel (11) geöffnet wird.

6. Der Fachöffnungsverhinderungsmechanismus nach Anspruch 5, worin das brüchige Teil an der Drehwelle an einer Außenseite einer Seitenwand (17) des Fachkörpers (13) in Links- nach Rechtsrichtung vorgesehen ist.

## Revendications

1. Mécanisme de prévention d'ouverture de compartiment (T) pour empêcher un couvercle (11) d'un compartiment (4) d'être ouvert par une force externe appliquée au couvercle (11), le compartiment (4) présentant une structure configurée pour ouvrir et fermer une ouverture (22) d'un corps de compartiment (13) en faisant tourner le couvercle (11) vers le haut et vers le bas à partir du corps de compartiment (13),
comprenant des moyens de verrouillage (LM) prévus sur une extrémité d'ouverture du corps de compartiment (13), et un côté de face arrière (11b) du couvercle (11) avec lequel les moyens de verrouillage (LM) s'engagent mutuellement afin d'empêcher le couvercle (11) d'être ouvert lorsque le couvercle (11) est déformé vers l'intérieur dans un état complètement fermé du couvercle (11),
**caractérisé en ce que**:
le mécanisme de prévention d'ouverture de compartiment (T) comprend en outre un axe de rotation (15) à une position séparée du couvercle (11), ledit axe de rotation (15) agissant comme centre d'oscillation du couvercle (11) afin de faire osciller le couvercle (11) vers le haut et vers le bas dans le but de loger par glissement le couvercle (11) dans un espace de réception de couvercle (13b) au-dessus du compartiment, ouvrant et fermant de ce fait l'ouverture (22), et **en ce que**:
les moyens de verrouillage (LM) comportent une partie de griffe (21) sur l'extrémité d'ouverture du corps de compartiment (13), et une partie de verrouillage (24) sur le côté de face arrière (11b) du couvercle (11) et à une partie associée à la partie de griffe (21) dans l'état complètement fermé du couvercle (11),
dans lequel, lorsqu'une force externe est appliquée à une face avant du couvercle (11) dans l'état complètement fermé du couvercle (11), de telle sorte que le couvercle (11) soit déformé vers l'intérieur, la partie de verrouillage (24) s'engage avec la partie de griffe (21), et les moyens de verrouillage (LM) empêchent le couvercle (11) d'être ouvert.

2. Mécanisme de prévention d'ouverture d'un compartiment selon la revendication 1, dans lequel la partie de griffe (21) est prévue sur au moins une face parmi une face côté supérieur d'extrémité d'ouverture (26a) et une face côté inférieur d'extrémité d'ouverture (25a) du corps de compartiment (13), dans lequel le couvercle (11) est une structure configurée pour joindre une partie avant de couvercle (11a) et une partie arrière de couvercle (11b), et
dans lequel la partie arrière de couvercle (11b) comporte des nervures échelonnées (23A, 23B, 23C) qui s'étendent jusqu'à la partie avant de couvercle (11a) et, comme la partie de verrouillage (24), présente au moins une nervure à une partie qui associée à la partie de griffe (21) parmi une nervure côté supérieur (23C) et une nervure côté inférieur (23B) des nervures échelonnées.

3. Mécanisme de prévention d'ouverture d'un compartiment selon la revendication 1 ou 2, dans lequel la partie de verrouillage (24) présente une face inclinée (24b) sur un côté approchant la partie de griffe (21), et dans lequel, lorsqu'une force externe est appliquée à la face avant (11a) du couvercle (11) dans l'état complètement fermé, la partie de griffe (21) glisse sur la face inclinée (24b) et s'engage avec la partie de verrouillage (24).

4. Mécanisme de prévention d'ouverture d'un compartiment selon la revendication 1, dans lequel la partie de griffe (21) est prévue sur une face côté supérieur d'extrémité d'ouverture (26a) du corps de compartiment (13), et un bord de la face côté inférieur d'extrémité d'ouverture (25a) du corps de compartiment (13) est renforcé en prévoyant une nervure (25r),
dans lequel le couvercle (11) est une structure qui est configurée pour joindre une partie avant de couvercle (11a) et une partie arrière de couvercle (11b),
dans lequel la partie arrière de couvercle (11b) comporte des nervures échelonnées (23A, 23B, 23C) qui s'étendent jusqu'à la partie avant de couvercle (11a) et, comme la partie de verrouillage (24), constitue une partie d'une nervure côté supérieur (23C) parmi les nervures échelonnées dont la partie est associée à la partie de griffe (21),
dans lequel la partie de verrouillage (24) présente une face inclinée (24b) sur un côté approchant la partie de griffe (21), et
dans lequel, lorsqu'une force externe est appliquée à la partie avant de couvercle (11a) dans l'état complètement fermé du couvercle, le couvercle (11) est déformé vers l'intérieur, une extrémité inférieure de couvercle (11d) glisse sur un côté supérieur de la face côté inférieur d'extrémité d'ouverture, et la partie de verrouillage (24) s'engage avec la partie de griffe (21) et empêche le couvercle (11) d'être ouvert.

5. Mécanisme de prévention d'ouverture d'un compartiment selon la revendication 1, comprenant en outre:
une partie de bras (16) configurée pour être prévue à un intervalle sur une face arrière (11b) du couvercle, pour être supportée par l'axe de rotation (15), et pour faire tourner le couvercle (11); et
un mécanisme de verrouillage (44) configuré de telle sorte qu'une griffe de verrou (12a) d'un bouton d'actionnement (12) prévu sur le couvercle (11) s'engage avec une partie de support de verrou (41) prévue sur un côté du corps de compartiment (13) et maintienne l'état complètement fermé du couvercle (11), dans lequel au moins soit l'axe de rotation soit la partie de bras comprend une partie fragile (15b) et une partie d'engagement (43) est prévue sur la face arrière du couvercle (11) à proximité du mécanisme de verrouillage (44), et
dans lequel, lorsqu'une force externe est appliquée à la face avant (11a) du couvercle (11) dans l'état complètement fermé du couvercle, la partie fragile (15b) est cassée et la partie d'engagement (48) s'engage avec le mécanisme de verrouillage (44) et empêche le couvercle (11) d'être ouvert.

6. Mécanisme de prévention d'ouverture d'un compartiment selon la revendication 5, dans lequel la partie fragile est prévue à l'axe de rotation prévu sur un côté extérieur d'une paroi latérale (17) du corps de compartiment (13) dans une direction de gauche à droite.
